# EUROPEAN PATENT APPLICATION

(11) **EP 2 746 689 A2**
(43) Date of publication of application: **25.06.2014**
(21) Application number: 13397540.9
(22) Date of filing: 20.11.2013
(51) Int. Cl.: F24F 13/06

(54) **Seal for a ventilation terminal device**

(30) Priority: 20.12.2012 FI 20126353
(71) Applicant: Fläkt Woods AB, 55184 Jönköping (SE)
(72) Inventor: Järvinen, Juha, FI-37800 TOIJALA (FI)
(74) Representative: Heinänen, Pekka Antero

(57) **Abstract**

Seal (7) for a ventilation terminal device, such as a valve, for sealing the seam between the body (2) and the mounting frame, which seal is essentially ring-shaped, in which case it has a first planar surface, which comes against the valve body, and a second planar surface on the opposite side to the first planar surface, which second planar surface comes against the mounting frame. The invention is implemented in such a way that at least the first planar surface of the seal (7) is formed at least partly from a material possessing a lower friction coefficient than the seal material.

## Description

The object of the present invention is a seal for a ventilation terminal device, such as a valve, for sealing the seam between the body and the mounting frame, which seal is essentially ring-shaped, in which case it has a first planar surface, which comes against the valve body, and a second planar surface on the opposite side to the first planar surface, which second planar surface comes against the mounting frame.

The invention thus relates to a seal to be used in a ventilation terminal device, more particularly in a supply air valve, with which seal the seam between the valve body and the mounting frame is sealed. The seal is ring-shaped and it is placed against the base of the valve body. The valve body, provided with a seal, is screwed into the mounting frame in a manner that is *per se* known in the art.

Superlon has previously been used as a seal material, in which case screwing the valve body into the mounting frame and out of it has succeeded without much trouble. The sealing tightness of superlon does not, however, fulfill all requirements, so it has been necessary to use a closed-cell cellular material, such as polyethylene or polyurethane, for improving the sealing tightness. The friction coefficient of these is, however, rather large, in which case screwing the valve body into the mounting frame is awkward and more particularly unscrewing with normal force is almost impossible.

The aim of the present invention is to achieve a seal, to which the aforementioned drawback is not attached. The seal according to the invention is characterized in that at least the first planar surface of the seal is formed at least partly from a material possessing a lower friction coefficient than the seal material.

One preferred embodiment of the seal according to the invention is characterized in that a surface coating essentially the shape of the ring-shaped seal is glued on top of the first planar surface of the seal.

A second preferred embodiment of the seal according to the invention is characterized in that the surface coating is a polyester film.

Yet another preferred embodiment of the seal according to the invention is characterized in that the surface coating is an aluminium film.

One advantage of the invention that can be mentioned is that the coating of the seal enables it to slip against the surface of the valve body, in which case the friction resistance of the valve when installing it into its position or detaching it is appreciably smaller than earlier.

In the following, the invention will be described in more detail by the aid of some preferred embodiments with reference to the attached drawings, wherein
Fig. 1 presents an oblique bottom view of a supply air valve.
Fig. 2 presents a ring-shaped seal according to the invention.

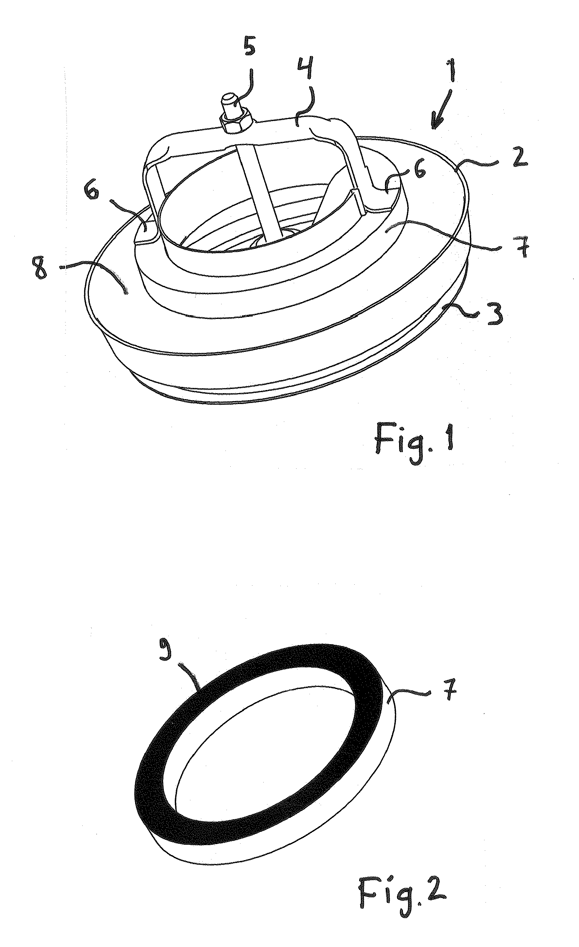

Figs. 1 and 2 present a terminal device for ventilation, in this case a supply air valve, which is composed of the body 2 of the valve and the cover 3. A truss 4 is fixed to the valve body, onto which truss the spindle 5 of the cover of the valve is in turn fixed. The ends 6 of the truss 4 are bent towards the side in such a way that they function as a thread when screwing the valve into the mounting frame. The mounting frame is not separately presented here, but it can be e.g. of the type presented in the FI patent 10211. The mounting frame is fixed e.g. to an aperture made in the wall or ceiling of a room and it is connected at its other end to the air ducting.

In Fig. 1 the ring-shaped seal installed into its position is presented with the reference number 7 and in Fig. 2 the same seal is presented separately and when turned upside-down. The seal is installed onto the inside edge of the valve body in the space between the base 8 of the body and the heads 6 of the truss. When the valve is screwed into the mounting frame, the seal seals the seam between the valve body and the mounting frame.

Fig. 2 thus presents a seal 7 according to the invention. The seal is essentially ring-shaped, in which case it has a first planar surface, which comes against the valve body, and a second planar surface on the opposite side to the first planar surface, which second planar surface comes against the mounting frame. As sealing material e.g. a closed-cell cellular plastic, such as polyethylene or polyurethane, which have good sealing properties, can be used. One such closed-cell plastic material that can be considered is known by the name PE 30 and it is composed of 85% polyethylene.

One planar surface of the seal 7 is coated (darkened area). The surface coating 9 is a material having a friction coefficient that is smaller than the friction coefficient of the actual seal material. According to one preferred embodiment a thin ring-shaped polyester film or aluminium film or aluminium foil, or a surface covering of some textile material, which covers the whole planar surface is glued to the surface of the seal 7. In principle, instead of glueing, the surface of the seal in question could be treated with a substance possessing a friction coefficient that is sufficiently low.

The seal in the structure of Fig. 1 is in an attitude wherein the surface coating 9 is downwards, i.e., against the base 8 of the valve body, and the uncoated surface is upwards. When the valve body is screwed into the mounting frame, the more slippery surface of the seal 7 is able to slide easily in relation to the valve body, in which case screwing is significantly easier than without a surface coating. In the final position the seal is so tightly compressed against the mounting frame that the coating material does not hinder the sealing tightness.

In principle, it is possible to coat both planar surfaces of the seal with a surface coating possessing a lower friction coefficient, but in practice this is not necessary. Also the sealing tightness might be jeopardized if also the side if the seal coming against the mounting frame is coated.

It is obvious to the person skilled in the art that the invention is not limited to the embodiments described above, but that it can be varied within the scope of the claims presented below. The surface covering 9 can also be formed in such a way that it covers only a part of the surface to be coated. In addition, it is possible to fabricate a seal by injection molding, in which a so-called sliding surface comes in the same process.

The invention is also not limited to a supply air valve, but instead it can be used also in other ventilation terminal devices in which there are corresponding structures.

The characteristic features possibly presented in the description in conjunction with other characteristic features can if necessary be used separately to each other.

## Claims

1. Seal (7) for a ventilation terminal device, such as a valve, for sealing the seam between the body (2) and the mounting frame, which seal is essentially ring-shaped, in which case it has a first planar surface, which comes against the valve body, and a second planar surface on the opposite side to the first planar surface, which second planar surface comes against the mounting frame, **characterized in that** at least the first planar surface of the seal (7) is formed at least partly from a material possessing a lower friction coefficient than the seal material.

2. Seal according to claim 1, **characterized in that** a surface coating (9) essentially the shape of the ring-shaped seal is glued on top of the first planar surface of the seal (7).

3. Seal according to claim 1 or 2, **characterized in that** the surface coating is a polyester film.

4. Seal according to claim 1 or 2, **characterized in that** the surface coating (9) is an aluminium film.

5. Seal according to claim 1 or 2, **characterized in that** the surface coating (9) is a textile material.
